# EUROPEAN PATENT APPLICATION

(11) **EP 0 683 555 A1**
(43) Date of publication of application: **22.11.1995**
(21) Application number: 95106910.3
(22) Date of filing: 08.05.1995
(51) Int. Cl.: H02G 15/068, H02G 15/06

(54) **Dry terminal for an electric cable**

(30) Priority: 18.05.1994 IT MI940995
(71) Applicant: PIRELLI CAVI S.p.A., I-20126 Milano (IT)
(72) Inventor: Parmigiani, Bruno, Milan (IT); Cicogna, Francesco, Milan (IT); Quaggia, Dario, Cinisello B. (MI) (IT)
(74) Representative: Giannesi, Pier Giovanni

(57) **Abstract**

In a terminal for a high-voltage electric cable, devoid of insulating oil or deformable fillers, a stiff tubular element provided with at least one conductive tubular portion electrically connected to the upper end portion of the bare conductor is disposed about the insulating layer of the cable from which the semiconductive screen has been removed. A ribbed coating of elastomeric material is fitted on the tubular element. The stiff tubular element and the conductive portion rest on an insulating body providing electric field control means at its inside, which means is disposed about the cable starting from the area where the screen has been removed. The tubular element and the conductive portion form a screen and a structure designed to withstand the cable weight and the transverse forces.

## Description

The present invention relates to a terminal for an electric cable and more particularly to a terminal for an electric cable intended for use outdoors for voltages included between 10 and 245 kV and more.

Outdoor terminals are known, for example for connecting a cable to an electric overhead line, usually comprising an insulating covering provided with means for connection to a support pylon, housing at the inside thereof the end portion of a cable devoid of its outer screening layer and provided with a field control element, the conductor of which extends until the end of the insulating covering, to be brought into communication with the overhead line.

According to the known art, the insulating covering consists of a porcelain element performing the function of ensuring insulation between the end portion of the live cable conductor and the earthed supporting structure of the terminal, by a surface extension sufficient to restrain the current passage along the outer surface of the terminal.

It is known that an electric cable of the extruded insulating type mainly comprises a central conductor consisting for example of a metal cord, made of copper or the like, coated with a semi-conductive layer, an insulating layer, a screen electrically earthed and a protection sheath.

At its entry into the terminal the cable is devoid of the sheath and screen and field control elements are used for restraining the electric field gradients at the screen breaking.

By field control elements, known per se, it is intended either a suitably radiated conductive body, usually referred to as electrode or baffle, commonly made of a semiconductive elastomeric material incorporated in a body of insulating material, the whole being sized so as to keep the electric field gradient within acceptable limits, or a material having a variable dielectric constant and conductivity depending on the electric gradient, or a capacitor system.

In an embodiment known from "New Prefabricated Accessories for 64-154 kV Crosslinked Polyethylene Cables (Underground Transmission and Distribution Conference, 1974, pages 224-232), a terminal for outdoor environments in particular comprises a base plate to which the base of a ribbed body made of porcelain is linked, to the upper end of which the cable conductor is connected through appropriate supporting and connecting means; an earth electrode and a field control cone, of elastomeric material, is forced onto the cable insulating surface within a cylinder of epoxy resin, at its entry into the ribbed body, whereas the free space within the ribbed body is filled with an insulating oil.

The insulating oil within the porcelain covering aims at eliminating the air subjected to possible ionization where the electric field is higher, which brings about impairment of the terminal integrity.

Such a terminal is mounted in an upright position, being linked at the base thereof to a bearing structure.

Also known are terminals for electric cables having a solid insulator, for example from "IEE Power Cables and Accessories 10 kV - 180 kV", London, November 1986, pages 238-241, in which the semi-conductive screen of a cable is removed over a certain length thereof starting from the cable end; the screen end is coated with a conductive paint extending over the cable insulator portion to which field-control heat-shrinkable tubes having a controlled impedance are applied. Said tubes and the uncovered insulator portion of the cable are then covered with a heat-shrinkable tube of an outdoor-resistant material incorporating an insulating profile located at the interrupted end of the cable screen; several heat-shrinkable annular fins are then fitted to the tube.

The above terminal, being devoid of stiff elements capable of supporting mechanical stresses in a direction transverse to the conductor axis, is suspended to a frame through an insulator.

A terminal of the so-called "synthetic" type, provided with upper connecting means, that is adapted to mounting of the "suspended" type is in addition described in CIGRE' 1992, 21-201, entitled "Synthetic Terminations for High Voltage Cables - Assessment of Service Life"; this publication shows that a terminal of the "synthetic" type, among other things, is exempt from risks of burst or fire in case of inner discharges,
with respect to traditional terminals of porcelain containing an insulating fluid.

Also known from patent US 4,757,159 is a terminal comprising a cable portion having an uncovered insulator, on which a multi-layered structure of an insulating material having a high dielectric constant, a semi-conductive material having a non-linear coefficient, is disposed.

By insulating material having a high dielectric constant it is intended a material having a dielectric constant relating to air higher than about 10.

An armouring extends over the whole length of the uncovered insulator portion and beyond the end of the conductive core of the cable, which armouring comprises several stiff rods of epoxy resin reinforced with unidirectional fibre glass and an external protecting and reinforcing tube.

In the above solution, in order to prevent the presence of air pockets, a deformable dry filling material, in particular a cement, is introduced in order to completely fill all free spaces between the rods, the external tube and the high-dielectric-constant layers. The ends of the rods and tube are confined by two insulating plates provided with appropriate inlet and outlet openings for passage of the cable within the terminal.

In the patent description it is pointed out that the reinforcing rods in combination with the insulating plates give the terminal a great stiffness as well as resistance to compression, tensile stress and bending moments.

Several cone-shaped fins are applied to said armouring, being disposed around the same and in contact with the external tube surface; both the tube and fins are of elastomeric material.

Terminals for outdoor environments according to the known art therefore have either a stiff structure in terms of bending, as in the case of an element of porcelain or the assembly according to US patent 4,757,159 (although in the case of the last mentioned patent the obtainable stiffness to bending is actually restricted being ensured by rods substantially independent of one another and of reduced sizes for bulkiness reasons), inside which the cable end is housed as far as the cable conductor projects from the upper end thereof, or a flexible structure elastically fitted to the cable end portion.
In the first case the use of a filler consisting of an oil or a particular cement between the cable and the terminal body is made necessary, which filler is to be applied thereto on the field and might come out, thereby impairing the terminal integrity; in the second case the lack of stiffness to bending of the terminal dictates mounting in a suspended configuration, so that a more complicated bearing structure is required as well as interposition of an insulator.

Also known are indoor terminals, that is adapted for use in a closed environment, the outer surface of which is intended for operation in contact with a gas or a dielectric oil, as disclosed for example in "Power Cables and Accessories 10 kV-500 kV", 23-25 November 1993, page 275 and in which no insulating fluid is provided between the insulator and the field-control element; the latter is advantageously embodied by an elastomer sleeve.

Such a terminal is particularly advantageous as regards application but it is not adapted for use outdoors, in that, in the presence of air and polluting elements laid down on its surface, it cannot offer a sufficient insulation between the live uncovered end and the area connected with the ground, due to the reduced length offered by its insulator.

In fact, the insulator length cannot be selected freely as it is connected with that of the field-control sleeve; on the other hand, since this sleeve is obliged to exert a radial pressure onto the cable and insulator by effect of the axial thrust applied to its end portion, it must exhibit a reduced length and at all events correlated with its external diameter. Said radial pressure is due, among other things, to tapering of the inner surface of the insulator and friction exerted between said insulator and the sleeve; for surfaces longer than 350 ÷ 400 mm, having sleeves with an external diameter of 200 ÷ 300 mm, friction exerted between the contact surfaces of the sleeve, cable and insulator would be unable to ensure a sufficient pressure to the interfaces, in particular during the thermal cycles of the cable, with axial-thrust loads to be supported without damages by the elastomeric materials used.

A roundup outline of known solutions for making terminals both for outdoor and indoor environments is also reproduced in CIGRE WG21-06, 15 October 1993, "Types of Accessories for HV Extruded Cables", in particular from page 18 to page 34.

The Applicant during the experiments it has done aimed at producing a terminal for electric cable devoid of external porcelain covering and insulating oil or of a deformable filler within an insulating covering, as disclosed by the state of the art previously cited, while at the same time trying to produce a terminal in which it was possible to respect the requirement of both keeping the electric field outside the insulating covering at a value consistent with the dielectric strength of the air, and giving rise to a leak line between the upper end portion of the terminal and its earthed base, so as to ensure a seal to surface discharges.

The Applicant has thought of making such a terminal by resorting to a tubular element of stiff material provided with at least one conductive tubular portion disposed about the cable insulator so as to make it possible, by virtue of the tubular element stiffness, to support the cable and side stresses applied thereto until a height sufficient to cause a leak line along the covering capable of ensuring a seal to the surface discharges and, in addition, thanks to at least one conductive tubular portion, to enable the creation of a screen to the electric field that would be generated by the cable conductor.

In particular the invention relates to a terminal for an electric cable having a conductor, an insulator and a screen, which comprises:
- an external vertical-axis body, surrounding at least the cable conductor;
- a lower end for entry of said electric cable into the external body of the terminal, comprising electric earthing means for said cable screen;
- field-control means, associated with said cable screen;
- a conductor shank uncovered at the upper end of the terminal, electrically connected with said cable conductor;
- a ribbed insulating external coating,
characterized in that said external body comprises:
- a base body, of an insulating material, within which said field-control means is housed, which is provided with mechanical means for connection to a bearing structure on the ground;
- a mechanically stiff and electrically conductive tubular element disposed about the conductor and extending from the shank to the area confined by said field-control means, mechanically connected to said base body, said tubular element being at least partly covered, on the external side thereof, with said ribbed insulating coating;
- means for electric connection between said conductive tubular element and the shank;
said conductive tubular element being at the potential of said shank and causing the absence of an electric field between said cable conductor and the inner surface thereof.

In one embodiment said tubular element consists of a single tube of a conductive stiff material and, preferentially, said tubular element consists of a single metal tube.

In an alternative embodiment said tubular element comprises a tubular portion of dielectric material with which a conductive tubular portion is integrally associated.

Preferably said tubular portion consists of an extension of the terminal base body.

In a particular embodiment said conductive tubular portion comprises a metal tube, or, as a variant, said conductive tubular portion is internally coated with a conductive paint.

In particular, said means for electric and mechanical connection between the shank and the conductive tubular element comprises an annular plate sealingly linked to the tubular portion, passed through by said shank and mechanically engaged to the latter, sealing means between the shank and the plate being provided as well as conductive means for electric connection between the shank and the plate.

In one aspect of the invention, the field-control means within the base body extends over a given height, corresponding to an electric field at the external surface of the base body not higher than 2.5 kV/mm and, preferably, not higher than 2 kV/mm.

In particular, said conductive tubular element is electrically connected, at its lower end portion, to a conductive bush surrounding the upper end of said field-control means.

Preferentially the terminal comprises means for protecting the external side surface of the base body, which is electrically insulating and resistant to tracking.

More preferably, said protection means comprises a coating of elastomeric material.

In a particular embodiment, said coating of elastomeric material is integral with said ribbed insulating coating.

Alternatively, said coating of elastomeric material is contiguous and adjacent to said ribbed insulating coating.

Preferentially said ribbed insulating coating is an element longitudinally continuous at least over the extension of said tubular element and is linked thereto in a close-fitting manner.

In a particular embodiment said ribbed insulating coating comprises several rings of elastomeric material elastically fitted to said tubular portion.

Further features and advantages will become more apparent from the detailed description of some preferred embodiments of a terminal for electric cable according to the present invention, given hereinafter by way of non-limiting example with reference to the accompanying drawings, in which:
- Fig. 1 is a general view of a terminal according to the invention;
- Fig. 2 is a longitudinal sectional view of the terminal of Fig. 1 according to one preferential embodiment thereof;
- Fig. 3 shows a preferential embodiment of a detail seen in Fig. 2;
- Fig. 4 is a longitudinal sectional view of the inventive terminal according to a second preferential embodiment thereof;
- Fig. 5 shows a preferential embodiment of a detail seen in Fig. 4;
- Fig. 6 shows the course of the equipotential surfaces in a terminal according to the invention.

According to the present invention a terminal is comprised of a base body of insulating material, within which field-control insulating means is placed, which base body extends so as to form a stiff tubular element of predetermined height, provided with at least one conductive tubular portion and having a ribbed coating of elastomeric material fitted thereon. Such a tubular element provided with said conductive tubular portion performs at least two functions:
a) a mechanical one, in that, as it is stiff, it sustains the cable portion in the terminal in an upright position and withstands the transverse stresses applied thereto for example by the conductor of the overhead line, the wind pressure and the like, thereby restraining the side bending of the terminal itself;
b) an electric one in that, since within said conductive tubular portion the electric field is zero, the cable length contained therein is not electrically stressed.

The tubular element provided with at least one conductive tubular portion may be embodied in several different forms all of them being adapted to perform the above functions.

In the following by the expression "stiff tubular element provided with at least one conductive tubular portion" it is intended to mean all solutions comprising a stiff tubular element incorporating a conductive tubular portion therein, which element may either be of one piece construction and made up of a single conductive material or, as an alternative, consist of a dielectric element associated with a conductive portion integral thereto.

It is for example possible to have a tubular element of a stiff material, such as a synthetic, thermoplastic or thermosetting material for example, chemically or mechanically coupled to a tube or a layer of a conductive material or a material made conductive. Bonding between the two materials can be achieved by chemical adhesion, glues or the like.

Two examples of terminals in accordance with the invention will be described hereinafter, each of them having a preferential form of the tubular element provided with at least one conductive tubular portion.

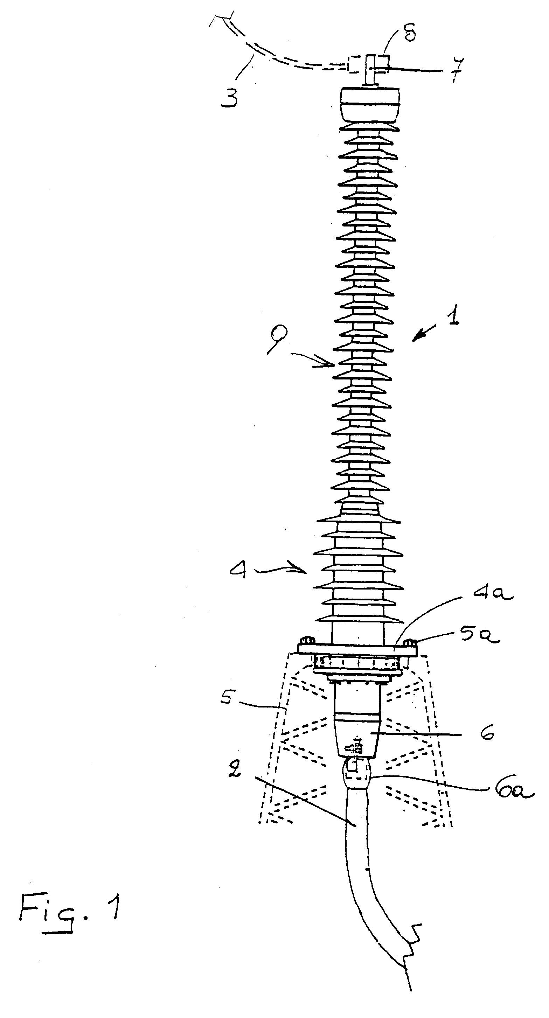

As shown in Fig. 1, one terminal 1 connects a high-voltage cable 2 to an overhead conductor 3.

In the examples herein described the cable is of the extruded-insulator type and applies in the high-voltage (as far as 170 kV) field.

While in the following the terminal of the invention is specifically described in combination with an extruded-insulator cable, it also applies to advantage when cables having layered insulating coatings, impregnated with oil or an insulating mixture are concerned, due to the advantages that said terminal offers; as a matter of fact it enables an important reduction in the amount of insulating oil within the terminal, as can be seen in the following, so that, as a result, the risks of bursts in case of internal short circuits are reduced as compared to traditional porcelain terminals.

The terminal, starting from a lower inlet end portion towards the upper end portion, comprises: a base body 4 provided with a flanged lower portion 4a, linked to a support pylon 5 by screw threaded means 5a or the like; a metal tube union, of copper for example, within which the electric cable 2 entering the terminal is conducted; a conductive shank 7 projecting from the upper end portion of the terminal, to which the overhead conductor 3 is connected through a respective connecting terminal 8 or the like; a suitably ribbed tubular body 9 extending over the base body 4 as far as the shank 7 and ensuring an appropriate spacing between the shank and the pylon 5, as described in the following.

The base body and ribbed body 9 have features adapted to ensure an insulation between the live shank 7 and the pylon 5 electrically connected with the ground.

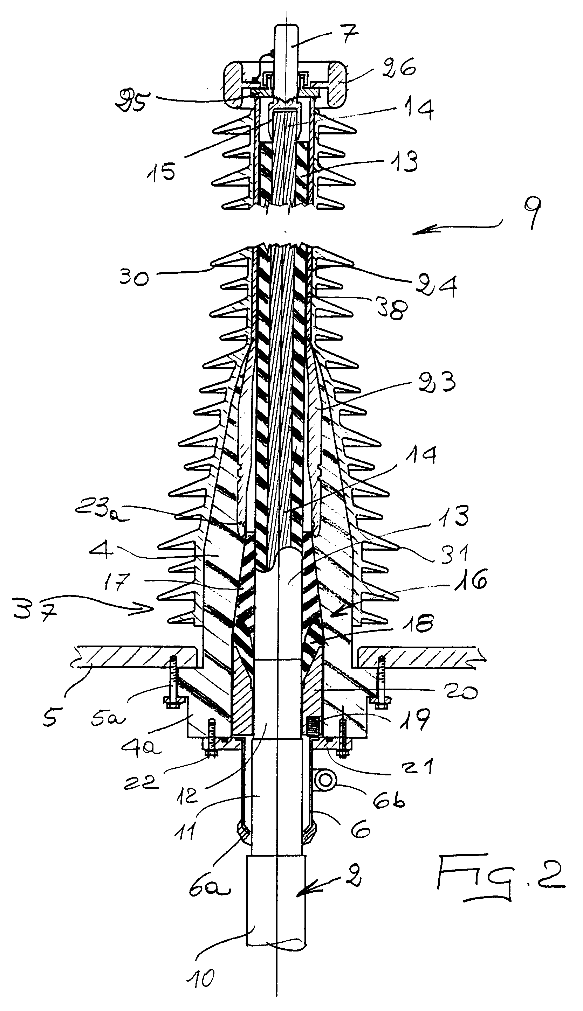

Shown in Fig. 2 is a terminal for an electric cable seen in axial section, according to one preferential embodiment.

Cable 2, as discernible from Fig. 2, close to the terminal is devoid of its external sheath 10, so that its internal sheath 11 is uncovered, which internal sheath is made of lead, if the cable is wished to be waterproof, or copper strands, thin plates or the like if the insulator can work in the presence of humidity; a semiconductive elastomeric layer 12, in turn uncovered over a length thereof, is present under the internal sheath 11.

The semiconductive layer 12 constitutes the cable screen designed to contain the electric field inside it.

The tube union 6 connected to the inner sheath 11 through a soldering 6a and provided with appropriate sealing means of known type towards the base body 4, ensures impermeability, if required, between the base body 4 and the cable and carries out earthing of the cable screen and sheath, through an earth wire, not shown, connected to an eyelet 6b or the like.

Under the screening layer 12 the cable comprises an insulating layer 13 surrounding the electric conductor 14, consisting for example of a copper cord.

Beyond the breaking off of the semiconductive screening layer of the cable, the conductor and surrounding insulator extend as far as the terminal top.

At the upper portion of the terminal, as shown in Fig. 2, the conductor 14 projects from the insulating layer 13 and is electrically connected to the shank 7 by a connecting metal terminal 15 which is deformable by compressive stresses.

In the region where the cable enters the terminal base body, at the area thereof where the semiconductive layer 12 has been removed so as to uncover the insulating layer 13, a field-control element 16 is present which consists of a premoulded sleeve comprising an element of an insulating elastomeric material 17 and a field baffle 18 of semiconductive elastomeric material.

The external surface of the insulating element 17 is cone-shaped and is pushed under pressure against a mating cone-shaped surface located within the base body 4, through an elastic system.

For example, as shown in the figure, such elastic system consists of springs 19 compressed between a block 20 the cone-shaped surface of which is in contact with a corresponding cone-shaped surface of the baffle 18, and a plate 21 fastened to the end of the base body by means of screws 22.

Forces originated by compression of said springs push the sleeve 16 against the surfaces enclosing said sleeve so as to eliminate the presence of air between the contacting portions and compensate for possible size variations in the materials, as a result of temperature variations for example.

Preferentially, the insulating element 17 is made up of an EPR blend (an ethylene-propylene copolymer-based elastomer, or an ethylene-propylene-diene terpolymer) free from conductive charges and the field baffle 18 is formed of an EPR blend made conductive by carbon black charges.

The base body 4 is made of an insulating material, such as an epoxy resin for example charged with high-resistant fibres, silica powder or similar materials, adapted to give strength and dimensional stability, and is internally hollow, thereby forming said cone-shaped surface mating with the external surface of the insulating element 17.

Housed within the base body 4 is a bush 23 of a metal material, exhibiting a suitably-radiated-ended lower portion 23a extending as far as close to the upper end of the insulating element 17 of the sleeve 16 electrically screening the end thereof.

In the embodiment shown in Fig. 2, the tubular body 9 consists of a conductive tubular portion 24 of a metal material, connected to the bush 23.

Due to the link between the conductive tubular portion 24 and bush 23 and the bush 23 and base body 4, a structure resistant to the transmitted charges both in the vertical and transverse direction is created.

The tubular portion 24 at the upper end thereof, is mechanically and electrically connected to the shank 7.
To this end, a metal plate 25 sealingly engaged to the end of the tubular portion 24 by soldering or the like, is fitted on the shank 7 and fastened thereto, for example by a tightened stuffing system.

Preferably, the bush 23 is made of an aluminium alloy, so as to achieve a coefficient of thermal expansion consistent with that of the base body 4 to which it is rigidly fastened; the tubular portion 24 can be soldered to the bush 23 and in this case it is preferably of the same material as the bush or a material consistent therewith; alternatively, the tubular portion 24 can be mechanically fastened to the bush 23, by a threaded coupling for example, and in this case it can be made of a conductive material selected on the basis of different specific requirements, steel for example.

Preferentially the plate 25 is made of the same material as the tubular portion 24, particularly in the case it is fastened thereto by soldering.

The shank 7 is in turn surrounded by a screening ring 26, suitably sized and electrically connected thereto, adapted to avoid "corona discharges" at conductor portions of high bending.

In the embodiment shown the screening ring 26 is connected to the plate 25.

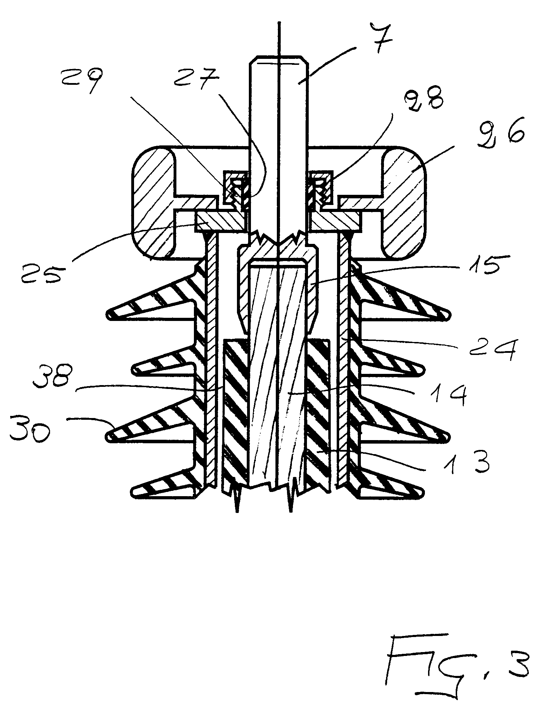

According to the particular solution shown in Fig. 3, the means connecting the plate 25 to the shank 7 is comprised of a seal 27 clamped by a threaded ring nut 28 fitted on the threaded extension 29 of the plate 25.

Tightening of the ring nut 28 ensures the mechanical engagement between the shank and the plate 25 by friction; the electric connection is ensured for example by a conductive element 25a connected to the plate and the shank, diagrammatically shown in the figures.

The outer surface of the tubular portion 24 is provided with a close-fitting coating 30 provided with fins, the assembly forming the ribbed body 9.

The coating 30 is made of a weatherproof insulating elastomer material capable of not exhibiting the "tracking" phenomenon under the foreseen use conditions.

By "tracking", as defined in IEC 1109 standard of 1992, it is intended an irreversible surface decay of the insulating material involving formation of conductive paths even under dry conditions.

A material adapted for the purpose can be for example an EPR blend (an ethylene-propylene copolymer-based elastomer, or an ethylene-propylene terpolymer) or silicone rubber.

The close-fitting coating 30 preferably extends so as to coat the base body 4 at least partly; preferentially the coating 30 extends as far as it completely coats the base body 4 by a lower portion 31 thereof provided with fins according to requirements.

Said extension can be of one piece construction, in which case it is made by moulding of portion 31 together with coating 30 and tight fitting of said portion onto the base body 4, in particular if the tubular element 24 and bush 23 are made separately and connected with each other, for example by threaded fit.

Alternatively, said extension can be obtained by separately making portion 31 integral with the base body 4, and coating 30 integral with the tubular element 24.

In the above embodiment, portion 31 can be bonded to the coating 30 so as to be unitary therewith, for example by vulcanization.

In a variant (not shown), connection between portion 31 and coating 30, when they are made separately, can be achieved by a spring sleeve, fitted by interference so as to overlap the junction between portion 31 and coating 30, where said portion 31 and coating 30 face each other.

Such a junction sleeve may be made of an elastomer material, such as EPR or silicone rubber, having appropriate electric features in terms of insulation and tracking-resistance, as well as mechanical features in order to ensure a sufficient contact pressure on the borders of the coating 30 and projection 31, capable of eliminating possible air pockets in areas of high electric field thereby avoiding all risks of electric discharges.

According to another solution, the tubular element 24 may be made of steel, in which case a coating of elastomeric material is extruded thereon and fins are fitted on said elastomer coating.

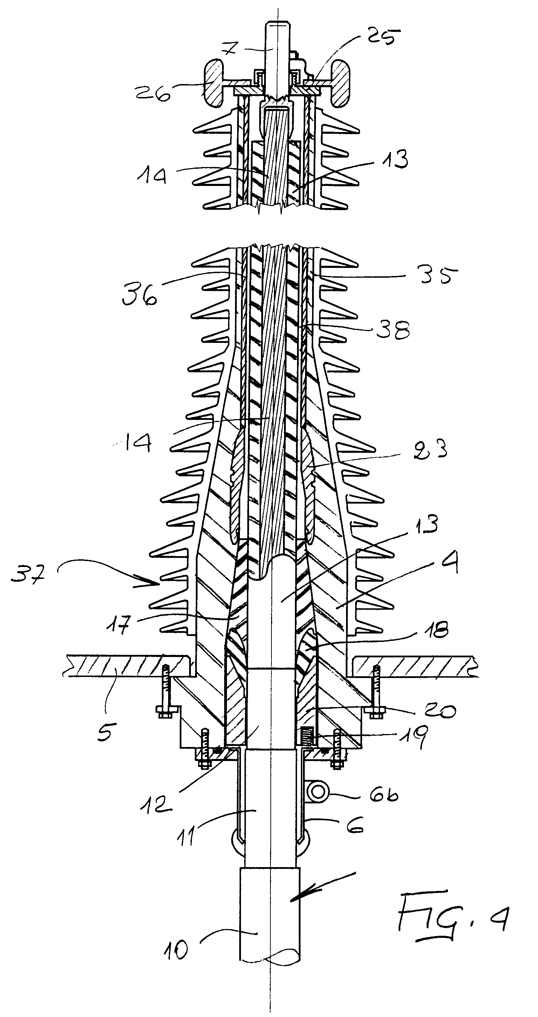

A second preferential embodiment is shown in Fig. 4. In said figure parts of the terminal similar to those shown in Fig. 2 have been allocated the same reference numerals as in said figure.

As shown in Fig. 4, in said embodiment the tubular body 9 consists of the tubular portion 35 of the base body 4, extended as far as the insulator top, that is substantially as far as the plate 25; within the tubular portion 35 there is a conductive portion consisting of a conductive tube 36 extending until it is electrically connected to the conductive bush 23 and optionally mechanically connected thereto.

Then, the ribbed insulating coating 30 is fitted on the whole external surface of the base body. The tubular portion 35 of the base body terminates close to the plate 25 along with the end of the conductive tube 36, and is mechanically connected thereto.

In this way, both the tubular portion 35 of the base body 4 and the conductive tube 36, depending on their thicknesses and respective stiffness, cooperate in forming the self-bearing structure of the terminal designed to support the cable in an upright configuration and withstand external stresses, in particular transverse thrusts.

The conductive tube 36, made of a metal material, such as steel, copper, aluminium, or another conductive material, performs the function of an electric screen about the cable insulator, being equipotentially connected to the plate 25 and shank 7, in turn connected to the bare conductor 14 due to deformation by compression of the connecting terminal 15.

In this embodiment the conductive tube 36 can be dimensioned taking into account the electric (screening) purposes alone, in which case the mechanical resistance of the terminal, in particular as regards bending stresses, exclusively relies on the tubular portion 35, or the necessary resistance based on the specific requirements may be shared between the conductive tube 36 and tubular portion 35.

In particular, depending on the conductive materials used, the conductive tube thickness may be reduced to such values that the conductive tube only performs its function of electric screen, leaving the function of self-bearing structure to the tubular portion of stiff material.

For example, the conductive tube 36 can be obtained by painting the inside of the tubular stiff portion with a conductive or semiconductive paint, thereby forming the required screen.

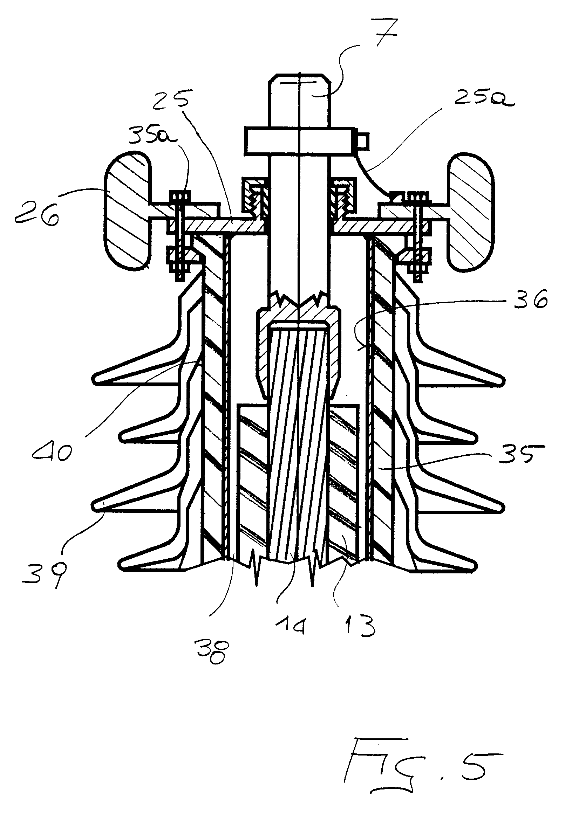

In this embodiment, as shown in Fig. 5, the mechanical connection on top of the terminal is made between the plate 25 and tubular portion 35, for example through screwing means 35a or the like, following construction typologies well known in the art; the conductive tube 36 is therefore brought into electric connection with the plate 25 and shank 7, by modalities adapted to the specific materials.

By way of example, a terminal having the configuration shown in Figs. 2 and 4, for voltages up to 170 kV has an overall height (from connection to the bearing structure 5 until the shank 7) of about 2000 mm, thereby accomplishing a leak line, between the shank and support pylon, of about 5800 mm.

For housing a cable provided with the maximum diameter of insulator for the 170 kV class, the free inner diameter of the tubular element 9 can be preferably selected of at least 100 mm.

In the embodiment shown in Fig. 2, with a base body about 500 mm high, the wall thickness of tube 24, of an aluminium alloy (hardened and tempered Duralumin) is about 8 mm.

In the embodiment shown in Fig. 4, the general sizes being the same, the conductive tube 36 can be made with a minimum (a few micron) thickness by means of a conductive paint, and the tubular portion 35, of epoxy resin filled with fibre glass or the like, is 25 mm thick.

Said terminal, in the configuration both of Fig. 2 and Fig. 4, mounted in an upright position and submitted to a horizontal force of 250 kg applied to the shank 7, shows a side deflection of about 10 mm; this value falls within the elastic limits of the materials for the terminal and therefore is in accordance with IEC 137 standard of 1984 (clauses 7, 28).

The detected deflection, in addition, must be such that it does not greatly affect the safety distance for mounting of the terminal, which distance in the embodiment shown is in the order of about 1.5 m.

The above described terminal operates as follows.

As known, in an electric cable comprising a conductor, an insulator and a screen disposed coaxially, there is an electric field between the live conductor and the earthed screen thereof, confined within the insulator; at the terminal such a field must pass from the configuration confined within the cable to a non-confined configuration, typical of an uncovered conductor, and such transition must take place in such a manner that the occurrence of high local field values that could cause discharges, is avoided.

In particular, at the screen interruption, that is at the semiconductive layer breaking off, the electric field would take very high values, unendurable by the materials used in the absence of appropriate expedients, due to a great bending taken by the screen in such a region.

The field baffle 18 therefore has the purpose of enabling the electric field to be distributed in the insulating element 17 and within the body 4 (or even in the coating thereof) so that, both inside the different materials and on the outer surface of body 4 in contact with the air, there is an electric field value consistent with the dielectric strength of the materials themselves and the air; just as an indication, an acceptable value of electric field in the air is lower than 2.5 kV/mm and preferably lower than 2 kV/mm.

For a good electric behaviour of the sleeve 17 as a whole for the above purposes, the interface surfaces between the cable insulator 13 and sleeve 17 and between the sleeve 17 and body 4 are required to be devoid of air and under relative compression, and to remain such in time, even in the presence of temperature variations; the features of such sleeves are known in the art, as previously pointed out, and are not further described.

At the sleeve 17 and the surrounding portion of the base body there are no air regions that may someway promote the occurrence of electric discharges in high-potential areas.

Such a result is achieved in that the springs 19 of the elastic system bring the inner and outer surfaces of the premoulded sleeve 16 into a strong contact pressure both with the insulating layer 13 of the conductor and against the inner cone-shaped surface of the base body 4.

In addition, it is pointed out that stresses produced by the cable, such as weight, temperature variations and the like are not transmitted to the premoulded sleeve 16 but to the insulating base body 4, so that they do not impair the correct operation of the sleeve.

Alternatively, in particular for voltages lower than or equal to 60 kV, the sleeve 17 can be made of a material having a voltage-varying resistivity, well known in the art.

The assembly consisting of the base body 4 and elastic sleeve 17 constitutes an end unit, generally denoted by 37 in the drawings, which can be such sized in length and diameter that it is capable of carrying out an efficient distribution of the electric field until acceptable values upon contact with the air; this unit, however, is not long enough to offer a surface path adapted to restrain the current towards the ground to commonly acceptable values, in the order of some mA.

It is in fact necessary that between the live shank 7 and the earthed bearing frame or pylon 5 a leak line sufficient to ensure a seal against surface discharges under the provided environmental use conditions be accomplished, taking into account work voltages, air saltiness conditions, existing pollution and so on.

The conditions for establishing this leak line are specified for example in publication 815 of 1986 by the "International Electrotechnical Commission" entitled "Guide for the selection of insulators in respect of polluted conditions".

Terminals having a configuration similar to that of the end unit 37 in fact are used only in a confined environment, in the presence of dielectric oil or gas, having a dielectric rigidity 5 to 10 times greater than that of the air, as described in the above mentioned "Power Cables and Accessories 10 kV-500 kV", 23-25 November 1993, page 275, while they cannot be employed in the air at use voltages provided for the terminal in accordance with the present invention.

In order to accomplish this leak line the overall height of the terminal must be therefore increased to the required values, spacing the shank 7 apart from the support frame 5.

As discernible from the examples shown in Figs. 2 and 4, the electric cable 2 exhibits an insulating layer 13 devoid of the respective semiconductive screen 12, over the field control means.

Due to removal of the semiconductive screen 12, the electric field generated by the conductor 14 at some areas on the insulator surface would have a high value exceeding the value consistent with the dielectric rigidity of the air, and therefore capable of triggering electric discharges in the presence of air.

While in the known art, under the above circumstances filling with insulating oil or the like was carried out, in the present invention a conductive tubular portion is provided which is embodied in the example of Fig. 2 by the conductive tube 24 and in the example of Fig. 4 by the conductive tube 36, in both cases electrically connected to the conductor 14 and therefore to its own potential, so that no potential gradient takes place through the space 38 included between the external surface of the insulator 13 and the internal surface of the conductive tubular portion (tube 24 or 36).

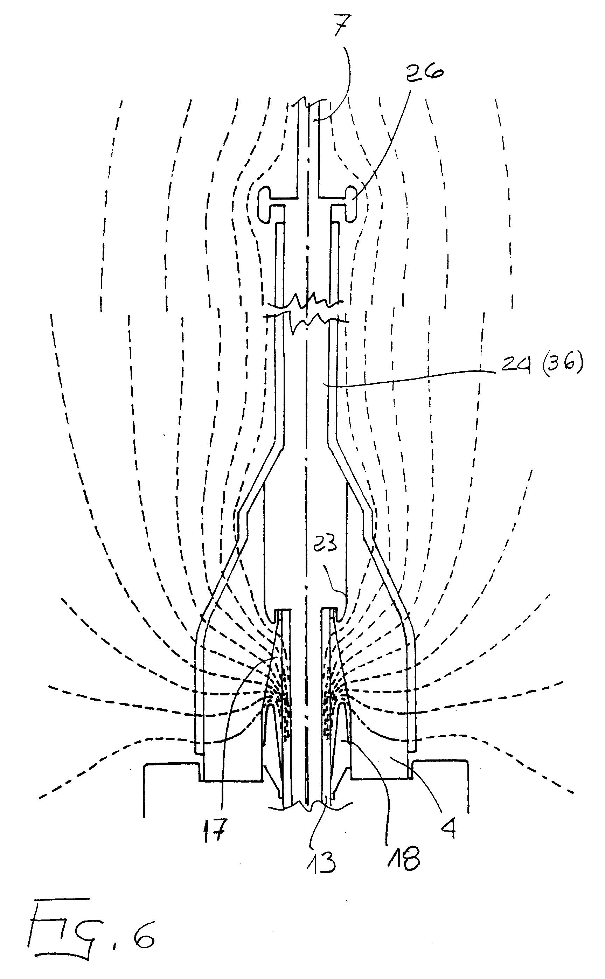

As shown in Fig. 6, in fact, the equipotential surfaces of the electric field which are substantially parallel and cylindrical within the cable insulator (included between the conductor 14, corresponding to a 100% equipotential surface, and the earthed screen 12 corresponding to a 0% equipotential surface) diverge at the field control element 17 and their distance, proportional to the electric field intensity, decreases radially; therefore, in order to ensure that in the areas where air is present the field intensity value is consistent with the dielectric strength of the air, an appropriate outer diameter for body 4 is selected.

In the absence of the screening effect given by the conductive tubular portion (24 or 36), shifting of the equipotential surfaces close to the cable conductor would take place, which will bring about an increase in the field intensity (proportional to the distance between the equipotential surfaces) until values that are not consistent with the presence of air, in particular in the region included between the surface of the cable insulator and the tubular element 24 are reached.

The screening effect given by the tubular element 24, on the contrary, causes the field to maintain its substantially cylindrical configuration along the terminal body and be zero in the area included between the cable insulator and the insulator tubular portion.

For the above reason, the presence of air in said space 38 does not give rise to problems of electric discharges within the terminal, whereas at the outside thereof the field values are maintained below critical conditions.

In the embodiment of Fig. 2 the desired diameter is obtained by suitably selecting the appropriate size of tube 24 and thickness of the ribbed coating 30.

In the embodiment of Fig. 4 it is possible to give the external diameter of the base body 4 a size sufficient to reduce the electric field below the above values and connect the tubular portion 35 thereto.

It is also possible to replace the insulating ribbed coating 30 fitted on the outer surface of the tubular stiff portion by a series of elastomer fins 39, disposed in series one after the other, as shown in Fig. 5, under elastic clamping conditions over the external surface of the tubular portion 35 or over a cylindrical elastomer coating of said portion 35.

In the above solution the possible presence of air on the outer surface of the tubular portion 35, due to an imperfect clamping of the fins 39 against portion 35 (or the above mentioned cylindrical elastomer coating), or at the junction between one fin and the other, as shown for example in Fig. 5 at the area denoted by 40, is unable to produce electric discharges since the electric field in this region is consistent with the air strength.

The inventive terminal has features capable of avoiding the occurrence in operation of electric surface discharges along the external insulating covering between the bare conductor connected to the shank and the earthing point of the terminal on the support pylon.

Such surface discharges have been hitherto avoided for high-voltage terminals, as known to those skilled in the art, by lengthening the path along the external covering surface, that is for example resorting, as already said in the description of the state of the art, to coverings and fins made of porcelain or similar dielectric material, shaped in different ways in order to increase the strength to the passage of surface current.

The self-bearing stiff structure of porcelain or similar dielectric material of the known art enabled the height of the terminal to be extended and, as a result, the number of fins increased, so as to lengthen the path between the two points having the maximum difference of potential for avoiding electric discharges, but, as it was made of an insulating material and substantially had a zero potential, the use of a filler, such as an insulating oil or a deformable dry filler (cement) was required between the inner surface of the covering and the unscreened surface of the cable insulator, which also involved technical problems brought about by the specific features of said materials.

As discernible from the examples in Figs 2 and 4, the terminal of the invention respectively comprises a conductive metal tube 24, or a tubular portion 35 of epoxy resin associated with a conductive tube 36, made of metal or a conductive paint.

Said tube-shaped stiff elements are mechanically connected by a rigid plate to the wire terminal to which the bare conductor is anchored and are coated with the ribbed tube of insulating material.

Therefore, by such stiff and electrically conductive tubular elements it is possible, taking into account the voltage values, weather conditions and the like of the intended application, to select the necessary height of the terminal and increase the number of the insulating plates of the external fins in proportion to the terminal height, without encountering problems of side deflections in the terminal, while at the same producing a terminal devoid of a fluid or pasty filler.

The above described terminal assembly can be advantageously installed in the absence of specific operations to be carried out on the field, such as filling with oil, gas or other fillers, and has no problems of deterioration in time, such as oil or gas leakages or decay of the filler material, or risks of bursts, while at the same time offering the best mechanical features that make it suitable for use in an upright self-bearing configuration. In addition the structure of the invention lends itself to be tested at the factory on a sample cable, so as to highlight the presence of intrinsic defects, if any, and subsequently dismantled and brought to the destination site for use.

## Claims

1. A terminal (1) for an electric cable having a conductor (2), an insulator (13) and a screen (12), which terminal comprises:
- an external vertical-axis body, surrounding at least the cable conductor;
- a lower end for entry of said electric cable into the external body of the terminal, comprising electric earthing means (6b) for said cable screen;
- field-control means (16), associated with said cable screen;
- a conductor shank (7) uncovered at the upper end of the terminal, electrically connected with said cable conductor;
- a ribbed insulating external coating (30),
characterized in that said external body comprises:
- a base body (4) of an insulating material, within which said field-control means is housed, which is provided with mechanical means for connection to a bearing structure (5) on the ground;
- a mechanically stiff and electrically conductive tubular element (24; 35, 36) disposed about the conductor and extending from the shank to the area confined by said field-control means, mechanically connected to said base body, said tubular element being at least partly covered, on the external side thereof, with said ribbed insulating coating (30);
- means for electric connection between said conductive tubular element and said shank;
said conductive tubular element being at the potential of said shank and causing the absence of an electric field between said cable conductor and the inner surface thereof.

2. A terminal for an electric cable according to claim 1, characterized in that said tubular element consists of a single tube (24) of a conductive stiff material.

3. A terminal for an electric cable according to claim 2, characterized in that said tubular element consists of a single metal tube (24).

4. A terminal for an electric cable according to claim 1, characterized in that said tubular element comprises a tubular portion (35) of dielectric material with which a conductive tubular portion (36) is integrally associated.

5. A terminal for an electric cable according to claim 4, characterized in that said tubular portion (35) consists of an extension of the terminal base body.

6. A terminal according to claim 4, characterized in that said conductive tubular portion comprises a metal tube.

7. A terminal according to claim 5, characterized in that said conductive tubular portion comprises an inner coating of said tubular portion (35) with a conductive paint.

8. A terminal according to claim 1, characterized in that said means for electric and mechanical connection between the shank and the conductive tubular element comprises an annular plate (28) sealingly linked to the tubular portion, passed through by said shank and mechanically engaged to the latter, sealing means between the shank and the plate being provided as well as conductive means for electric connection between the shank and the plate.

9. A terminal according to claim 1, characterized in that the field-control means within the base body extends over a given height, corresponding to an electric field at the external surface of the base body not higher than 2.5 kV/mm.

10. A terminal according to claim 9, characterized in that said predetermined height corresponds to an electric field at the surface of the base body not higher than 2 kV/mm.

11. A terminal according to claim 1, characterized in that said conductive tubular element is electrically connected, at its lower end portion, to a conductive bush surrounding the upper end of said field-control means.

12. A terminal according to claim 1, characterized in that it comprises means for protecting the external side surface of the base body, which is electrically insulating and resistant to tracking.

13. A terminal according to claim 12, characterized in that said protection means comprises a coating of elastomeric material.

14. A terminal according to claim 13, characterized in that said coating of elastomeric material is integral with said ribbed insulating coating.

15. A terminal according to claim 13, characterized in that said coating of elastomeric material is contiguous and adjacent to said ribbed insulating coating.

16. A terminal for an electric cable according to claim 1, characterized in that said ribbed insulating coating is an element longitudinally continuous at least over the extension of said tubular element and is linked thereto in a close-fitting manner.

17. A terminal for an electric cable according to claim 1, characterized in that said ribbed insulating coating is made of an elastomeric material.

18. A terminal for an electric cable according to claim 1, characterized in that said ribbed insulating coating comprises several rings of elastomeric material elastically fitted to said tubular portion.
